# EUROPÄISCHE PATENTANMELDUNG

(11) **EP 1 014 080 A1**
(43) Veröffentlichungstag der Anmeldung: **28.06.2000**
(21) Anmeldenummer: 99124332.0
(22) Anmeldetag: 06.12.1999
(51) Int. Cl.: G01N 27/12

(54) **Gassensor und Verfahren zu dessen Herstellung**

(30) Priorität: 23.12.1998 DE 19859998
(71) Anmelder: SIEMENS AKTIENGESELLSCHAFT, 80333 München (DE)
(72) Erfinder: Bausewein, Andreas, 85416 Langenbach (DE); Chemisky, Eric, 85540 Haar (DE); Dirndorfer, Bettina, 80469 München (DE); Jonda, Sven, 85567 Alxing (DE); Kornely, Susanne, 80689 München (DE); Meixner, Hans, 85540 Haar (DE); Schwebel, Tim, 81543 München (DE)

(57) **Zusammenfassung**

Es wird ein Gassensor mit einem Substrat, Meßelektroden und einer gassensitiven Schicht, sowie u.U. einer elektrischen Heizung beschrieben. Um die Gassensitivität eines Sensors zu verbessern, wird der Bereich zwischen Elekroden 1 derart gestaltet, daß in das Substrat 3 bei der Herstellung des Sensors Vertiefungen 4 eingebracht werden, die durch Material der sensitiven Schicht 2 ausgefüllt werden. Somit laufen mehr E-Feldlinien 5 über die sensitive Schicht 2 und der Strompfad durch das Substrat 3 wird verlängert, wodurch sich der Anteil der Leitfähigkeit durch das Substrat 3 verringert.

## Beschreibung

Die Erfindung betrifft einen Gassensor, an dem Widerstandsänderungen an einer gassensitiven Schicht aufgrund von vorhandenem Meßgas durch Elektrodenstrukturen detektiert werden. Weiterhin wird ein Verfahren zur Herstellung eines entsprechenden Gassensors beschrieben.

Die Leitfähigkeit halbleitender Metalloxidgassensoren, deren gassensitive Schicht beispielsweise aus Ga₂O₃, SrTiO₃, CeO₂ bestehen, wird üblicherweise über eine fingerartig ineinandergreifende Elektrodenstruktur bestimmt, die auch als Interdigitalstruktur bezeichnet wird. Diese wird beispielsweise mittels Siebdruck hergestellt. Strukturbreiten bewegen sich im Bereich von ca. 100 µm. Diese Strukturbreiten sind mit dem genannten Verfahren relativ schlecht reproduzierbar, da sich Schwankungsbreiten ± 20 % ergeben. Andere Darstellungsverfahren sind beispielsweise Kathodenzerstäubung (Sputtern) oder Aufdampfen. Beides geschieht in Verbindung mit Photolithographie, wobei Strukturbreiten bis in den Sub-µ-Bereich denkbar sind.

Da die genannten Meßelektroden selten in die gassensitive Schicht, deren Leitfähigkeit bestimmt werden soll, eingebettet sind, setzte sich der gemessene Leitwert aus der Summe der Leitfähigkeiten der eigentlich zu messenden gassensitiven Schicht und der des Substrates, auf dem sich die Elektroden und die gassensitive Schicht, die gemessen werden soll, befinden, zusammen. Das Substrat sollte deswegen einen möglichst niedrigen Leitwert gegenüber dem Leitwert der gassensitiven Schicht aufweisen.

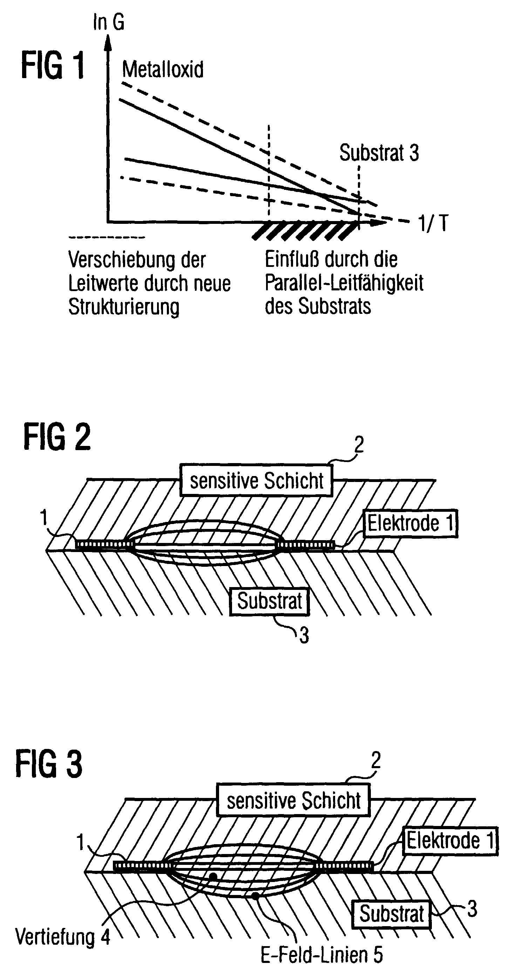

Um den oben beschriebenen Einfluß der Parallelleitfähigkeit des Substrates zu minimieren, gibt es bisher nur die Möglichkeit, als Substratmaterial ein System zu wählen, dessen Leitfähigkeit ohne sensitive Schicht deutlich unter der des Gesamtsystemes mit sensitiver Schicht liegt. Hier sollte ein Faktor von mindestens 10 vorliegen. Da die Temperaturabhängigkeit der Leitfähigkeit von Substrat und von zu messender Schicht in der Regel unterschiedliche Werte besitzt, wie es in Figur 1 dargestellt ist, kann es vorkommen, daß diese Bedingungen nur in eingeschränkten Temperaturbereichen erfüllt werden kann. Andere geeignete Temperaturbereiche bleiben wegen annähernd gleicher Leitwerte G von Substrat und von der zu messenden Schicht unzugänglich.

Ein herkömmlicher Sensoraufbau eines halbleitenden Gassensors wird in Figur 2 dargestellt. Auf dem Substrat befinden sich eine Heizung in Form von metallischen Leiterbahnen, Meßelektroden, sowie die gassensitive Schicht. Leiterbahnen sind in der Regel mäanderförmig angeordnet. Der Stromkreis einer Heizung ist möglichst von dem der sensitiven Schicht zu entkoppeln. Optional kann ein Temperaturfühler integriert sein, der z.B. als Pt 25 ausgeführt ist. Heizung und Temperaturfühler sind jedoch praktisch notwendig, weil die gassensitiven Eigenschaften von beispielsweise Metalloxiden als gassensitive Schicht meist erst bei erhöhten Temperaturen auftreten. Temperaturbedingte Schwankungen des Meßsignales sind zu vermeiden.

Der Erfindung liegt die Aufgabe zugrunde, einen Leitfähigkeitsgassensor bereitzustellen, der verbesserte Detektionseigenschaften aufweist. Weiterhin ist ein Herstellungsverfahren anzugeben.

Die Lösung dieser Aufgabe geschieht durch die Merkmale von Anspruch 1 bzw. Anspruch 4.

Vorteilhafte Ausgestaltungen sind den Unteransprüchen zu entnehmen.

Der Erfindung liegt die Erkenntnis zugrunde, daß durch zwischen Meßelektroden eingebrachte Vertiefungen im Substrat der Strompfad durch das Substrat verlängert wird, wodurch sich der Anteil der Leitfähigkeit durch das Substrat verringert. Andererseits nimmt die Leitfähigkeit in der zu messenden sensitiven Schicht durch eine Vergrößerung des Volumens des sensitiven Materials bei gleichem Elekrodenabstand zu. Das Verhältnis der Leitfähigkeit wird also zugunsten der zu messenden sensitiven Schicht verschoben, wodurch auch Messungen bei tieferen Temperaturen möglich sind.

Zur Aufbringung der gassensitiven Schicht ist es vorteilhaft, die Vertiefungen im Substrat mit einer relativ rauhen Oberfläche auszubilden.

Im folgenden wird anhand von schematischen Figuren ein Ausführungsbeispiel beschrieben.
- Figur 1: zeigt ein Diagramm mit dem temperaturabhängige Verlauf der Leitfähigkeit bei Metalloxiden/gassensitive Schicht und bei Substraten,
- Figur 2: zeigt einen Sensoraufbau nach dem Stand der Technik ohne Vertiefungen zwischen den beiden Elektroden,
- Figur 3: zeigt einen erfindungsgemäßen Sensoraufbau mit Vertiefungen im Substrat zwischen den Meßelektroden, wobei die zuletzt aufgebrachte sensitive Schicht in die Vertiefungen hineinreicht,
- Figur 4: zeigt eine Draufsicht auf eine Elektrodenstruktur mit wichtigen Abmessungen.

Figur 1 zeigt die Temperaturabhängigkeit der Leitfähigkeit von Substrat und von zu messender Schicht. Als zu messende Schicht sind in diesem Falle Metalloxide genannt. Als Substrat wird beispielsweise Aluminiumoxid/Tonerde verwendet. Durch den entsprechenden Verlauf der Leitfähigkeiten der genannten Substanzen ergibt sich ein Bereich, in dem sich die Kurven schneiden, also bei gleicher Temperatur gleiche Leitfähigkeiten von Metalloxid und Substrat vorliegen. Da in diesem Fall der Anteil des Strompfades über das Substrat zu einer Meßwertverfälschung führt, kann dieser Temperaturbereich nicht genutzt werden. Die in Figur 1 dargestellten gestrichelten Linien stellen die Veränderungen dar, die durch die Strukurierung des Sensors mit Gräben zwischen den Elektroden 1 resultieren.

In Figur 2 wird ein herkömmlicher Aufbau eines Sensors dargestellt. In diesem Fall ist die Oberfläche des Substrates 3 zwischen den Elektroden 1 eben ausgebildet. Die gassensitive Schicht 2 ist entsprechend auf dem Substrat und den Elektroden 1 aufgebracht worden. Die Linien des entsprechend ausgebildeten E-Feldes zwischen den Elektroden 1 verlaufen zu gleichen Teilen im Substrat 3 und in der sensitiven Schicht 2.

Die Bearbeitung und die Abstimmung von Hybridschaltungen mittels Lasertechnik ist allgemeiner Stand der Technik. Dort werden in Siebdrucktechnik hergestellte Widerstände durch Einschnitte mit Lasern getrimmt. Erhöht man nun bei der Herausarbeitung der verschiedenen Leiterbahnen aus einer Metallschicht die Leistung des verwendeten Lasers derart, daß nicht nur die Metallisierung sondern auch ein Teil des Substrates verdampft, so entsteht an den Orten, wo die Metallisierung entfernt wird, zusätzlich eine Vertiefung 4 im Substrat 3, entsprechend Figur 3. Der Vorteil dieser Vertiefung 4 besteht einerseits darin, daß der Strompfad durch das Substrat verlängert wird, wodurch sich der Anteil der Leitfähigkeit durch das Substrat verringert. Andererseits nimmt bei ausreichender Schichtdicke der zu messenden sensitiven Schicht 2 (die Schichtdicke sollte sehr viel größer als die Elektrodenhöhe sein) die Leitfähgikeit G durch eine Vergrößerung des Volumens von dem zu messenden sensitiven Material bei gleichem Elekrodenabstand zu. Das Verhältnis der Leitfähgikeit wird zugunsten der zu messenden sensitiven Schicht verschoben, wodurch auch Messungen mit der sensitiven Schicht 2 bei tieferen Temperaturen möglich werden.

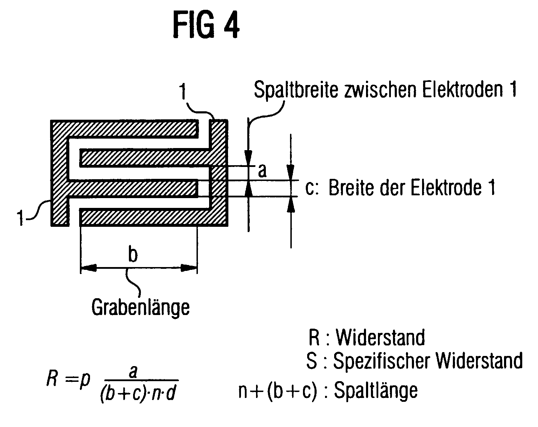

In Figur 4 ist eine Elektrodenstruktur in Draufsicht dargestellt. Entsprechend der angegebenen Formel läßt sich der elektrische Widerstand R berechnen. Die Länge eines Grabens oder einer Vertiefung 4 ist mit b gekennzeichnet.

Weitere Vorteile einer Vertiefung entstehen durch die Entfernung und Verdampfung von Verunreinigungen, die sich durch das Handling bei der Substratherstellung auf dessen Oberfläche anlagern. Ein anderer Vorteil besteht darin, daß die Oberfläche des Substrates in den Vertiefungen 4 eine sehr große Rauhigkeit aufweist. Durch die angerauhte Oberfläche wird für die auf zubringenden Schichten eine bessere Haftung erzielt. Des weiteren weisen die Elektrodenstrukturen bei Abständen im Bereich von 30 bis 100 µm eine gute Reproduzierbarkeit auf. Mit Siebdruck sind diese Strukturen nur schwer herstellbar.

Bei der Veränderung der ursprünglichen Geometrie mit einem Elektrodenabstand von ca. 160 µm und einer effektiven Spaltlänge von ca. 10 mm in Siebdrucktechnik auf einen Elektrodenabstand von ca. 80 µm und einer Spaltenlänge von 20 mm, hergestellt mittels Lasertechnologie, würde sich normalerweise bei gleicher Elektrodenhöhe die Leitfähigkeit von Substrat und gassensitiver Schicht jeweils um den Faktor 5 erhöhen. Statt blieb die Substratleitfähigkeit in Versuchen im Rahmen der Meßgenauigkeit unverändert. Bei diesen Substraten betrug die Tiefe des Grabens ca. 30 bis 40 µm. Dabei verlängert sich bei einem Elekrodenabstand von 80 µm der Strompfad auf ca. 140 µm.

## Patentansprüche

1. Gassensor bestehend aus
- einem Substrat (3),
- auf dem Substrat (3) aufgebrachten Meßelektroden (1),
- einer auf dem Substrat (3) und den Meßelektroden aufgebrachten gassensitiven Schicht (2),
**dadurch gekennzeichnet,** daß
sich zwischen den Meßelektroden (1) Vertiefungen (4) im Substrat (3) befinden, die mit dem Material der gassensitiven Schicht aufgefüllt sind.

2. Gassensor nach Anspruch 1,
**dadurch gekennzeichnet,** daß die Oberfläche der Vertiefungen (4) eine hohe Rauhigkeit aufweist.

3. Gassensor nach einem der vorhergehenden Ansprüche,
**dadurch gekennzeichnet,** daß die Vertiefungen (4) ca. 30 bis 50 µm tief sind.

4. Verfahren zur Herstellung eines Gassensors nach einem der Ansprüche 1 bis 4, wobei
- auf ein Substrat (3) eine Metallisierung zur Darstellung von Meßelektroden (1) aufgebracht wird,
- die Darstellung der Meßelektroden (1) mittels Laserstrahlen geschieht, mit denen vorbestimmte Bereiche der Metallisierung verdampft werden,
**dadurch gekennzeichnet,** daß
- zwischen den Meßelektroden (1) Vertiefungen (4) dargesellt werden, und
- die Vertiefungen (4) mit dem Material der sensitiven Schicht bei deren Aufbringung ausgefüllt werden.

5. Verfahren nach Anspruch 4,
dadurch gekennzeichnet, daßvor der Laserbearbeitung eine Deckschicht auf die Metallisierung aufgebracht wird, so daß sich kein Niederschlag von verdampftem Substratmaterial auf den herausgearbeiteten Elektroden ausbilden kann.
